# EUROPEAN PATENT SPECIFICATION

(11) **EP 1 303 721 B1**
(45) Date of publication and mention of the grant of the patent: **31.08.2005**
(21) Application number: 01937046.9
(22) Date of filing: 07.06.2001
(51) Int. Cl.: F16L 5/04

(54) **INSULATING CASING**
ISOLIERGEHÄUSE
ENVELOPPE ISOLANTE

(30) Priority: 07.06.2000 NO 20002890
(43) Date of publication of application: 23.04.2003
(73) Proprietor: R & M Industrier, 5863 Bergen (NO)
(72) Inventor: STEINSEIDET, Magne, N-5314 Kjerrgarden (NO); SAELE, Trond, N-5097 Landas (NO); HELLEBO, Rune, N-5141 Fyllingsdalen (NO); TORBALL, Tom, N-1084 Oslo (NO); OEN, Eivind, Robert, N-5152 Bones (NO); LIODDEN, Olav, N-5235 Radal (NO)
(74) Representative: van Westenbrugge, Andries
(86) International application number: PCT/NO2001/000236
(87) International publication number: WO 2001/094828

(56) References cited:
- FR-A1- 2 494 391
- GB-A- 2 161 655
- GB-A- 2 270 936
- US-A- 2 054 308
- US-A- 5 176 408

## Description

The present invention relates to an insulating casing which is applied when a pipe is led through a deck or a wall, and such that the casing on one or both sides of the deck/wall seals the gaps between the pipe and the guiding sheath (sleeve) in such a way that requirements for gas tightness, smoke tightness and temperature requirements are met. The invention also relates to a method and a system for explosion-proof sealing when the operation is carried out.

It is often necessary to lead pipes or other components through floor or wall sections from one room to an adjacent room, and where, in the adjacent room, there can be requirements for gas and gas tightness, and specific requirements for the temperature. With respect to fire and explosion safety such leading-through operations represent a risk as they weaken the fire and explosion requirements which the floor itself or wall are constructed for. For example, during leading of pipelines through a deck on an oil platform, it is absolutely crucial that the leading-through is safeguarded so that flames and explosions etc cannot spread from one deck to another.

The invention which is described in this patent application is first and foremost aimed at application on platforms, but can be used at any leading-through operation where technical requirements with regard to fire and explosion are made.

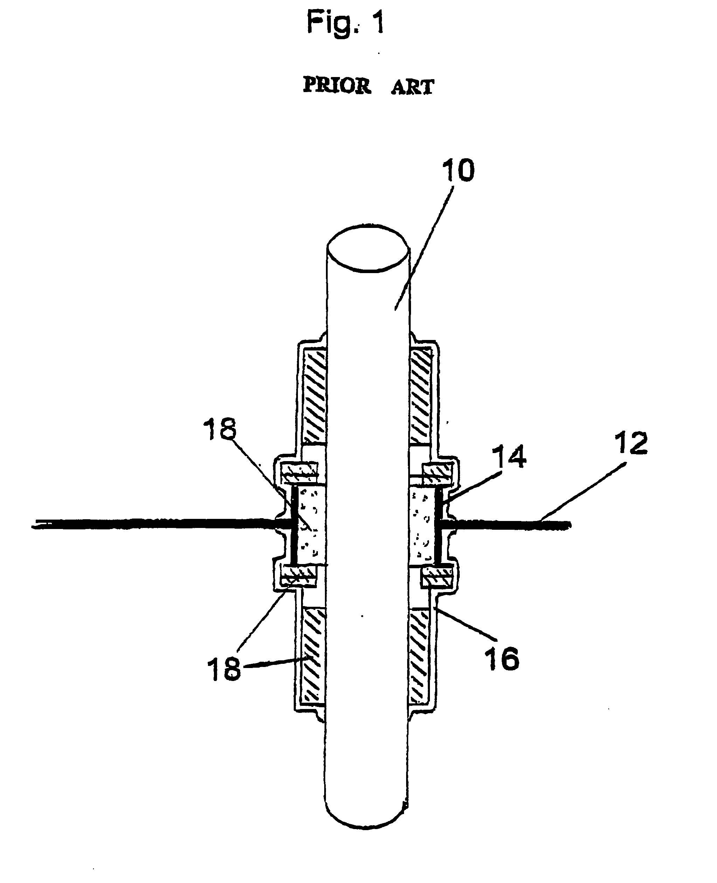

There will always be a gap between the outer surfaces of the pipe and the opening in the deck/wall for such leading-through operations with pipes. There are different solutions for insulating such leading-through operations of pipes on the market today, and fig. 1 shows one solution which is marketed by Rockwool. Shown in the figure is a pipe 10 which is led through a deck 12 with associated sheath 14. By sealing the opening, i.e. by insulating the leading-through operation, one will prevent a fire or explosion spreading from one side of the deck to the other. Fig. 1 shows a sleeve 16 (penetration cover) which seals the gap between the sheath 14 and the outer surface of the pipe 10. This sleeve is produced from a glass fibre cloth and a metal wire netting which is shaped to fit the dimension of the sheath 14 and pipe 10. The materials which are used are in themselves not particularly insulating, and therefore there must be used additional insulating materials 18 between the sleeve 16 and pipe 10. As mentioned, the sleeve 16 is prefabricated in shapes which are made to fit according to the dimensions of the different pipes and guiding pipes. This is a considerable disadvantage compared with the present invention. Furthermore, the solution is complex to install and the adaptation of the insulating material is particularly time consuming.

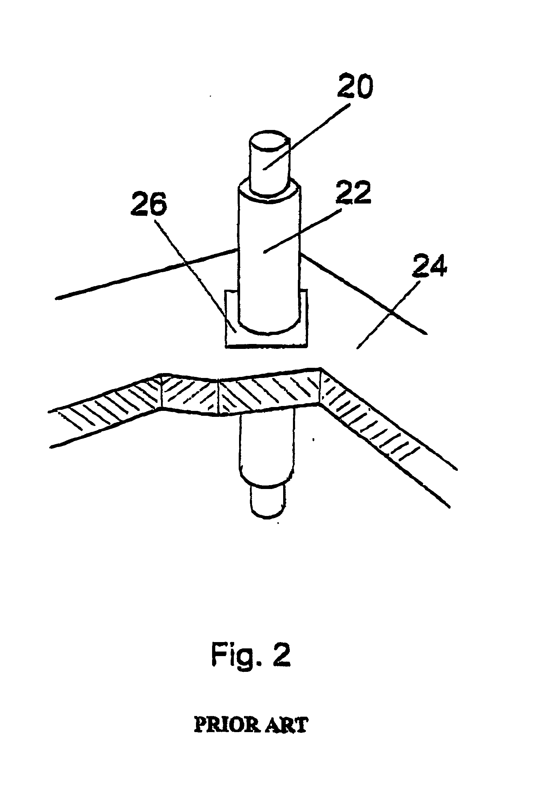

Another solution which is used to seal the gap between the pipe 20 and deck 24 is shown in fig. 2. The pipe 20 is encased in an insulating layer 22, and the remaining gap is sealed by the fitting of a cast plate 26. This solution is therefore very different from the present invention, and a major disadvantage with this solution is that the cast plate cannot be disassembled and used again.

In connection with the novelty assessment carried out in connection with the priority application NO 20002890, the following publications appeared;

FR 2494391 describes a flange seal for sealing of the annular space between an inner pipe and an outer pipe. This solution has been known for many years, but in connection with the problem which the present patent is attempting to solve, this solution has not been considered as a real alternative, even if the solution concept itself can appear somewhat similar to the present invention. The solution described in FR 2494391 can in no way provide sufficient guarantee against the transfer and spreading of explosions and fire from, for example, one deck to another.

The basis for the present invention is that one surprisingly has found that a material exists in the form of sheets which ensures a sufficient seal with regard to transfer of gas, explosion and temperature. This material can be sewn to any given shape to cover the gap between a pipe and the leading-through opening itself. This solution represents a considerable advance in relation to the solutions which are available on the market today.

An object of the present invention is thus to provide a solution which is much more flexible than the solutions which are known in the field, and which at the same time maintains, or also improves the insulating characteristics.

An aim of the present invention is therefore to provide a casing which in itself has sufficient insulating characteristics such that a further insulation on the inside of the casing is not required. It must be said however, that a preferred embodiment comprises such additional insulation.

Furthermore, it is an aim of the present invention that it shall be prefabricated, and that only small adjustments are necessary during installation, so that a quick and effective installation is possible. This is achieved by the device according to the invention being pre-fabricated as universal models, where each of these can be adjusted simply during the installation, within given dimension ranges, to the different dimensions of pipes and the leading-through openings. Furthermore, it shall be possible to use the invention for leading-through operations for components other than pipes.

To ensure such a flexible installation, it is an aim of the present invention that the material from which the casing is produced is flexible.

The above mentioned aims are achieved by using a multi-layer material with a particularly good insulating effect. In this connection the term "insulating effect" means that the material which is being used to provide a sealing between the pipe and the guiding pipe, must be heat resistant and furthermore prevent that heat etc penetrates the material. It is also preferred that the material can withstand a jet fire.

The material which is used, and which is tested in accordance with the invention, is capable of resisting an explosion of 1 bar, and thereafter a temperature of 1100 °C for two hours, without any damage to the material. This is sufficient to prevent a jet fire spreading from one room to another, and it is very surprising that a sheet-formed insulating material can be used for this purpose.

The choice of material is not a part of this invention, but tests have been carried out on a material which is known from patent application NO 19984893. This material is a so-called multi-layer material and is comprised of an insulating layer and a metal foil, and an outer cloth of a glass fibre or silicon substance. Preliminary tests with this material indicate that the material satisfies the international requirements. Full-scale tests are presently being carried out. A preferred embodiment of the device according to the invention uses this multi-layer material, but any material which meets the actual fire requirements and which is sufficiently flexible can be used.

The present invention is described in the appended claims.

The present invention will now be described in more detail with reference to the enclosed figures, in which;
Fig. 1 shows a prior art solution.
Fig. 2 shows a prior art solution.
Fig. 3 shows a casing according to the invention.
Fig. 4 shows a casing with additional insulation.
Fig. 5 shows a join according to the invention.

The present invention also relates to a method as described in the claims 8-14, and a system as described in the claims 15-19.

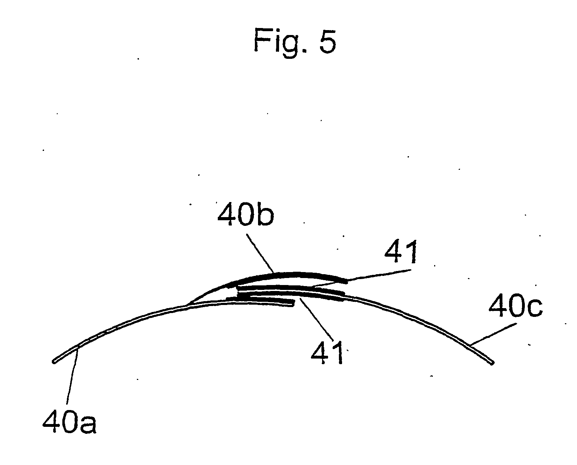

The material (for example the multi-layer material described above) is sown into a form, preferably in one piece, so that it can be shaped to a casing 30 in that two sections 40a and 40c (see fig. 5) are secured together. In most cases, the casing is fitted after the pipe 31 is fitted into the guiding pipe opening 32a, and that it will be appropriate to be able to disassemble the casing 30, and this will result in it being possible to open and close the casing 30. This often represents a weakness. To avoid that such a join becomes a weak point, while at the same time fitting and disassembly shall be performed quickly and effectively, the inventors of the present invention have developed a system with flap and double Velcro-locking (described below).

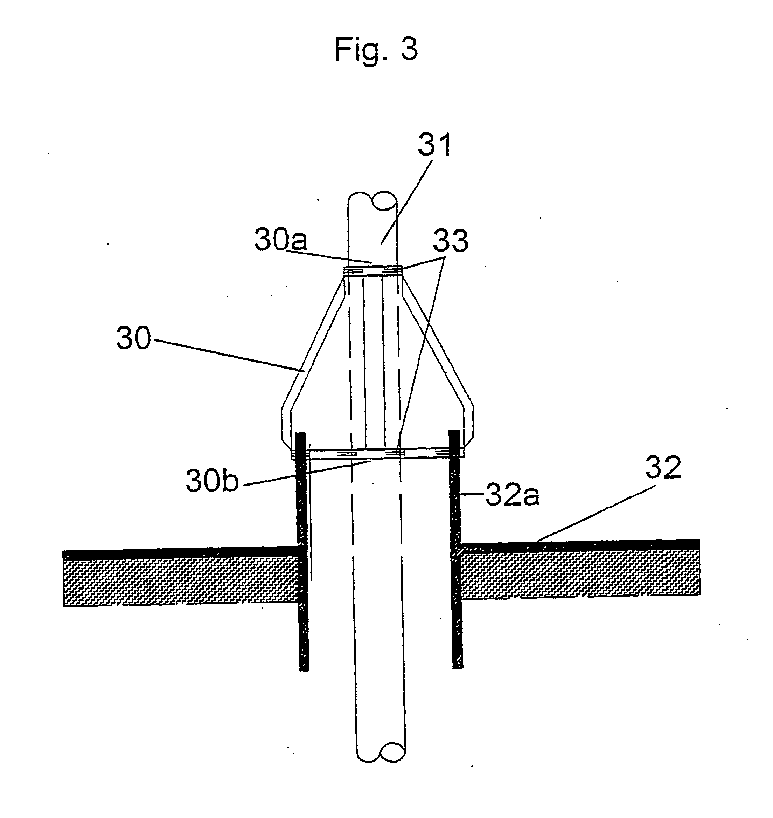

The casing 30 is made with two openings 30a, 30b and the opening 30a is given a dimension somewhat bigger than the outer circumference of the pipe 31, while the other opening 30b is adjusted so that it is somewhat larger than the pipe guiding sheath 32a on the deck 32. The casing 30 is secured to the pipe 31 and the pipe guiding sheath 32a respectively, with, for example, pipe clamps 33. As can be seen in fig. 3, the casing 30 will now seal the gap between pipe 31 and pipe guiding sheath 32a.

The casing can be secured on one or both sides of the deck 32, but in a preferred application of the invention, it is fitted to only the upside of the deck 32, i.e. on the side which is not exposed to fire/explosion.

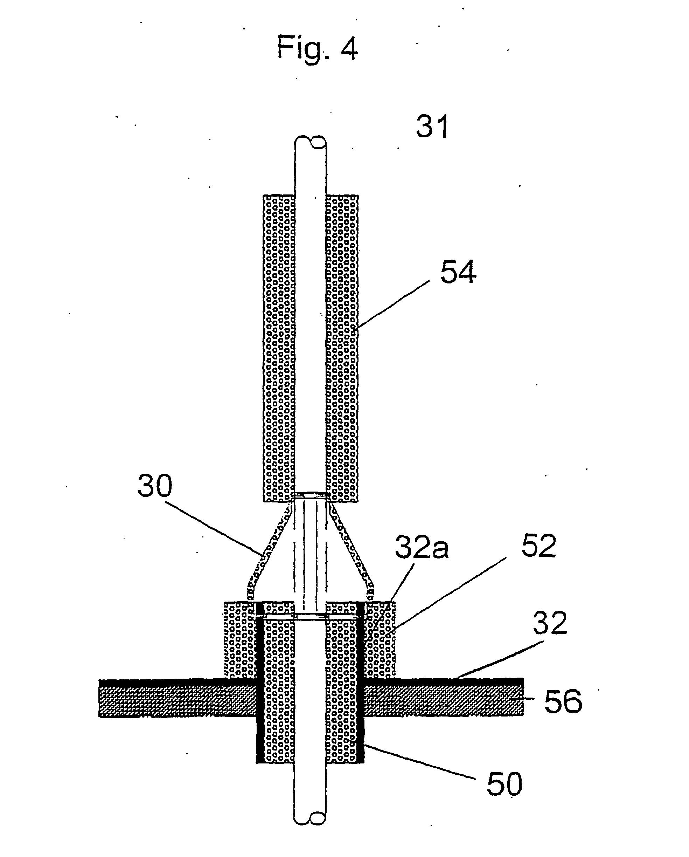

As mentioned, a preferred solution comprises the casing being used together with additional insulation. Such a system is shown in fig. 4 in which the insulating materials 50, 52 and 54 are arranged between the sheath 32a and pipe 31, externally with respect to the sheath 32a and externally on the pipe 31 itself, respectively. All the insulating material which is used is covered with a substance which prevents moisture seeping into the material. Corrosion, in connection with such pipe leading-through operations, is a well known and serious problem and the present solution represents a considerable advance with respect to solutions known from the prior art as such corrosion prevents the insulation from keeping out moisture.

As mentioned above, a system with a flap and double Velcro-lock is used in a preferred embodiment of the invention. This is shown schematically in fig. 5. The section 40a of the material is shaped with a flap 40b, which the other section 40c can be put into. When the section 40c is put into the flap, the two sets of Velcro 41 will make up a good join. In the join itself, three layers of the multi-layer material are arranged on top of each other. It has been found experimentally that when a Velcro join such as this is subjected to an increase in temperature, a chemical reaction will take place which actually reinforces the join itself. This is a surprising find too.

By using a wide Velcro(™) ribbon, one has the possibility to adjust the dimensions of the opening 30a and 30b so that the casing 30 can be adjusted to different pipe and guiding pipe dimensions. It is preferred that the multi-layer material is sufficiently flexible so that it can be shaped to encase the pipe dimensions down to 50 millimetre in diameter.

With respect to the known solutions which are described in fig. 1 and 2, the casing 30 has according to the invention many advantageous features;
- it is simple to install/disassemble, i.e., the maintenance on pipes lying underneath is simple to carry out,
- it can be pre-fabricated,
- it is flexible/pliable,
- it can be fitted on the unexposed side (avoid the use of scaffolding),
- it is not exposed to corrosion attacks.

This is, as far as we know, the first solution for sealing/insulating pipe leading-through operations in which the insulating characteristics are part of the casing itself, and with respect to the prior art solutions, the solution according to the invention represents a considerable improvement.

## Claims

1. Insulating casing (30) which is applied when a pipe (31) is led through a deck or a wall (32) through a guiding sheath (31a), and so that the casing (30) on one or both sides of the deck/wall seals the gaps between the pipe (31) and the guiding sheath (32a), **characterised in that** the casing (30) is made from a sheet-formed material which is cut and sown into the shape of a cylinder adjusted to different dimensions of pipe (31) and guiding sheath (32a) without casting.

2. Insulating casing (30) in accordance with claim 1, **characterized in that** the sheet-formed material demonstrates resistance against penetration by heat, flames and pressure, for example a so-called jet fire.

3. Insulating casing (30) in accordance with one of the claims 1-2, **characterized in that** the casing has the shape of a conical cylinder.

4. Insulating casing (30) in accordance with claim 1, **characterised in that** said sheet-formed material (30) is a multi-layer material comprising a heat resistant layer, a layer comprising of a metal foil and a layer of an insulating material.

5. Insulating casing (30) in accordance with one of the claims 1-4, **characterised in that** a silicone cloth for protection of the insulating material is arranged on all sides of the material.

6. Insulating casing (30) in accordance with claim 1, **characterised in that** said casing (30) comprises a first section (40a) comprising a flap (40b) and a second section (40c), wherein said second section (40c) is adapted to be arranged between the first section (40a) and the flap (40b) establishing a joint built up of three layers of sheet-formed material.

7. Insulating casing in according with claim 6, **characterised in that** the sections (40a, 40b, 40c) comprise a double set of Velcro (™) type locking system (41), enabling opening and closing of the casing (30).

8. Method for sealing a gap between a pipe (31) led through a guiding sheath (32a) in a deck or a wall, **characterised in that** a casing (30) made of a sheet-formed material is cut and sown into a cylindrical shape, and that the cylindrically formed casing (30) is arranged so that the casing (30) in one section (30b) surrounds the pipe (31) and another section (30b) of the casing (30) surrounds the guiding sheath (32a).

9. Method in accordance with claim 8, **characterised in that** said sheet-formed material is heat, flame and pressure resistant.

10. Method in accordance with claim 8, **characterised in that** said sheet-formed material can withstand an explosion of 1 bar and thereafter a temperature of 1100 °C for two hours.

11. Method in accordance with claim 10, **characterised in that** the material is a multi-layer material comprising of at least a heat resistant layer, a layer comprising of a metal foil and a.layer of an insulating material.

12. Method in accordance with claim 8, **characterised in that** said casing (30) comprises a first section (40a) comprising a flap (40b) and a second section (40c), wherein said second section (40c) is arranged between the first section (40) and the flap (40b) establishing a joint built up of three layers of sheet-formed material.

13. Method in accordance with claim 8, **characterised in that** the sections (40a, 40b, 40c) comprise a double set of Velcro(™) type locking system (41), enabling opening and closing of the casing (30).

14. Method in accordance with one of the claims 8-13, **characterised in that** the guiding operation is further insulated by arranging an insulating material between the casing (30) and the pipe (31), and/or between the pipe (31) and the guiding sheath (32a), and/or externally with respect to the pipe (31).

15. System capable of withstanding a jet fire spreading from one room to another by way of a pipe leading-through operation when a pipe (31) is led through a deck or a wall (32), **characterised in that** said system comprises a casing (30) which on one or both sides of the deck/wall seals the gap between the pipe (31) and guiding sheath (32a), where the casing is made from a sheet-formed material which is cut and sown into the shape of a cylinder adjusted to different dimensions of pipe (31) and guiding sheath (32a) without casting.

16. System in accordance with claim 15, **characterized in that** said sheet-formed material can withstand an explosion of 1 bar, and thereafter can withstand a temperature of 1100 °C for two hours.

17. System in accordance with claim 15, **characterised in that** said sheet-formed material in one layer comprises an insulating material, and that externally with regard to this insulating material is arranged a silicone cloth which ensures that the insulation does not get wet.

18. System in accordance with claim 15, **characterised in that** the casing (30) is sufficiently flexible to encase pipe dimensions of down to 50 millimetres.

19. System in accordance with claim 15, in which maintenance is simple to carry out **characterised in that** the casing (30) can be dismantled for inspection/maintenance.

## Patentansprüche

1. Isoliergehäuse (30), das zur Anwendung kommt, wenn ein Rohr (31) durch eine Führungshülse (31a) hindurch durch eine Decke oder eine Wand (32) geführt wird, so dass das Gehäuse (30) auf einer oder auf beiden Seiten der Decke/Wand die Spalte zwischen dem Rohr (31) und der Führungshülse (32a) verschließt, **dadurch gekennzeichnet, dass** das Gehäuse (30) aus einem plattenförmigen Material hergestellt ist, das in die Form eines Zylinders geschnitten und genäht ist, der an unterschiedliche Abmessungen von Rohr (31) und Führungshülse (32a) angepasst ist, ohne dass ein Gießen erforderlich ist.

2. Isoliergehäuse (30) nach Anspruch 1, **dadurch gekennzeichnet, dass** das plattenförmige Material einen Widerstand gegen ein Eindringen von Wärme, Flammen und Druck, beispielsweise gegen eine sogenannte Stichflamme, zeigt.

3. Isoliergehäuse (30) nach einem der Ansprüche 1-2, **dadurch gekennzeichnet, dass** das Gehäuse die Form eines konischen Zylinders hat.

4. Isoliergehäuse (30) nach Anspruch 1, **dadurch gekennzeichnet, dass** das plattenförmige Material (30) ein mehrlagiges Material ist, das eine Wärmewiderstandslage, eine eine Metallfolie enthaltende Lage und eine Lage aus einem Isoliermaterial umfasst.

5. Isoliergehäuse (30) nach einem der Ansprüche 1-4, **dadurch gekennzeichnet, dass** auf allen Seiten des Materials ein Silikontuch angebracht ist, das dem Schutz des Isoliermaterials dient.

6. Isoliergehäuse (30) nach Anspruch 1, **dadurch gekennzeichnet, dass** das Gehäuse (30) einen ersten Abschnitt (40a) mit einer Klappe (40b) und einen zweiten Abschnitt (40c) umfasst, wobei der zweite Abschnitt (40c) so beschaffen ist, dass er zwischen dem ersten Abschnitt (40a) und der Klappe (40b) angeordnet ist und eine Verbindung bildet, die aus drei Lagen aus plattenförmigen Material aufgebaut ist.

7. Isoliergehäuse nach Anspruch 6, **dadurch gekennzeichnet, dass** die Abschnitte (40a, 40b, 40c) einen Doppelsatz eines Verriegelungssystems (41) des Velcro™-Typs enthalten, der ein Öffnen und Schließen des Gehäuses (30) ermöglicht.

8. Verfahren zum Verschließen eines Spalts zwischen einem durch eine Führungshülse (32a) in einer Decke oder einer Wand geführten Rohr (31) und dieser Hülse, **dadurch gekennzeichnet, dass** ein Gehäuse (30), das aus einem plattenförmigen Material hergestellt ist, in eine zylindrische Form geschnitten und genäht wird und dass das zylindrisch geformte Gehäuse (30) so angeordnet wird, dass das Gehäuse (30) in einem Abschnitt (30b) das Rohr (31) umgibt und ein weiterer Abschnitt (30b) des Gehäuses (30) die Führungshülse (32a) umgibt.

9. Verfahren nach Anspruch 8, **dadurch gekennzeichnet, dass** das plattenförmige Material hitze-, flammen- und druckbeständig ist.

10. Verfahren nach Anspruch 8, **dadurch gekennzeichnet, dass** das plattenförmige Material einer Explosion mit 1 Bar und danach einer Temperatur von 1100 °C für zwei Stunden widersteht.

11. Verfahren nach Anspruch 10, **dadurch gekennzeichnet, dass** das Material ein mehrlagiges Material ist, das wenigstens eine hitzebeständige Lage, eine eine Metallfolie enthaltende Lage und eine Lage aus einem Isoliermaterial umfasst.

12. Verfahren nach Anspruch 8, **dadurch gekennzeichnet, dass** das Gehäuse (30) einen ersten Abschnitt (40a), der eine Klappe (40b) aufweist, und einen zweiten Abschnitt (40c) umfasst, wobei der zweite Abschnitt (40c) zwischen dem ersten Abschnitt (40) und der Klappe (40b) angeordnet ist und eine Verbindung bildet, die aus drei Lagen aus plattenförmigem Material aufgebaut ist.

13. Verfahren nach Anspruch 8, **dadurch gekennzeichnet, dass** die Abschnitte (40a, 40b, 40c) einen Doppelsatz eines Verriegelungssystems (41) des Velcro™-Typs umfassen, der das Öffnen und Schließen des Gehäuses (30) ermöglicht.

14. Verfahren nach einem der Ansprüche 8-13, **dadurch gekennzeichnet, dass** der Führungsvorgang ferner durch Anordnen eines Isoliermaterials zwischen dem Gehäuse (30) und dem Rohr (31) und/oder zwischen dem Rohr (31) und der Führungshülse (32a) und/oder außerhalb des Rohrs (31) isoliert ist.

15. System, das einer Stichflamme widerstehen kann, die sich von einem Raum in einen weiteren durch ein Rohrdurchführungsvorgang ausbreitet, wenn ein Rohr (31) durch eine Decke oder eine Wand (32) geführt ist, **dadurch gekennzeichnet, dass** das System ein Gehäuse (30) umfasst, das auf einer oder auf beiden Seiten der Decke/Wand den Spalt zwischen dem Rohr (31) und der Führungshülse (32a) verschließt, wobei das Gehäuse aus einem plattenförmigen Material hergestellt ist, das in die Form eines Zylinders geschnitten und genäht ist, der an unterschiedliche Abmessungen von Rohr (31) und Führungshülse (32a) angepasst ist, ohne dass ein Gießen erforderlich ist.

16. System nach Anspruch 15, **dadurch gekennzeichnet, dass** das plattenförmige Material einer Explosion von 1 Bar und danach einer Temperatur von 1100 °C für zwei Stunden widerstehen kann.

17. System nach Anspruch 15, **dadurch gekennzeichnet, dass** das plattenförmige Material in einer Lage ein Isoliermaterial umfasst und dass außerhalb dieses Isoliermaterials ein Silikontuch angebracht ist, das sicherstellt, dass die Isolation nicht nass wird.

18. System nach Anspruch 15, **dadurch gekennzeichnet, dass** das Gehäuse (30) ausreichend flexibel ist, um Rohrabmessungen abwärts bis zu 50 Millimeter zu umschließen.

19. System nach Anspruch 15, bei dem die Wartung leicht ausgeführt werden kann, **dadurch gekennzeichnet, dass** das Gehäuse für die Inspektion/Wartung auseinander genommen werden kann.

## Revendications

1. Enveloppe isolante (30) qui est appliquée quand un tuyau (31) est disposé à travers un plancher ou un mur (32) à travers une gaine de guidage (31a), et de telle sorte que l'enveloppe (30) sur l'un ou les deux côtés du plancher / du mur scelle les intervalles entre le tuyau (31) et la gaine de guidage (32a), **caractérisée en ce que** l'enveloppe (30) est fabriquée à partir d'un matériau en forme de feuillet qui est découpé et cousu en une forme de cylindre ajusté à différentes dimensions de tuyau (31) et de gaine de guidage (32a) sans moulage.

2. Enveloppe isolante (30) selon la revendication 1, **caractérisée en ce que** le matériau en forme de feuillet fait preuve d'une résistance à la pénétration par la chaleur, les flammes et la pression, par exemple à ce que l'on appelle un incendie explosif.

3. Enveloppe isolante (30) selon l'une des revendications 1 ou 2, **caractérisée en ce que** l'enveloppe a la forme d'un cylindre conique.

4. Enveloppe isolante (30) selon la revendication 1, **caractérisée en ce que** ledit matériau en forme de feuillet (30) est un matériau multi-couches comprenant une couche résistante à la chaleur, une couche comportant une feuille métallique et une couche d'un matériau isolant.

5. Enveloppe isolante (30) selon l'une des revendications 1 à 4, **caractérisée en ce qu'**une toile de silicone pour la protection du matériau isolant est disposée sur tous les côtés du matériau.

6. Enveloppe isolante (30) selon la revendication 1, **caractérisée en ce que** ladite enveloppe (30) comporte une première section (40a) comprenant un abattant (40b) et une seconde section (40c), dans laquelle ladite seconde section (40c) est adaptée pour être disposée entre la première section (40a) et l'abattant (40b) établissant un joint fait de trois couches de matériau en forme de feuillet.

7. Enveloppe isolante selon la revendication 6, **caractérisée en ce que** les sections (40a, 40b, 40c) comportent un double ensemble de système de fermeture de type Velcro™ (41), permettant l'ouverture et la fermeture de l'enveloppe (30).

8. Procédé pour sceller un intervalle entre un tuyau (31) disposé à travers une gaine de guidage (32a) dans un plancher ou un mur, **caractérisé en ce qu'**une enveloppe (30) fabriquée en un matériau en forme de feuillet est découpé et cousu en une forme cylindrique, et que l'enveloppe formée de manière cylindrique (30) est disposée de telle sorte que l'enveloppe (30) dans une section (30b) entoure le tuyau (31) et qu'une autre section (30b) de l'enveloppe (30) entoure la gaine de guidage (32a).

9. Procédé selon la revendication 8, **caractérisée en ce que** ledit matériau en forme de feuillet est résistant à la chaleur, aux flammes, et à la pression.

10. Procédé selon la revendication 8, **caractérisée en ce que** ledit matériau en forme de feuillet peut résister à une explosion de 1 bar et par la suite à une température de 1100°C pendant deux heures.

11. Procédé selon la revendication 10, **caractérisé en ce que** le matériau est un matériau multi-couches comprenant au moins une couche résistante à la chaleur, une couche comprenant une feuille métallique et une couche d'un matériau isolant.

12. Procédé selon la revendication 8, **caractérisé en ce que** ladite envleoppe (30) comporte une première section (40a) comprenant un abattant (40b) et une seconde section (40c), dans lequel ladite seconde section (40c) est disposée enter la première section (40) et l'abattant (40b), établissant un joint fait de trois couches de matériau en forme de feuillet.

13. Procédé selon la revendication 8, **caractérisé en ce que** les sections (40a, 40b, 40c) comportent un double ensemble de système de fermeture de type Velcro™ (41), permettant l'ouverture et la fermeture de l'enveloppe (30).

14. Procédé selon l'une des revendications 8 à 13, **caractérisé en ce que** l'opération de guidage est en outre isolée en disposant un matériau isolant entre l'enveloppe (30) et le tuyau (31), et / ou entre le tuyau (31) et la gaine de guidage (32a), et / ou de manière externe par rapport au tuyau (31).

15. Système capable de résister à un incendie explosif s'étendant d'une pièce à l'autre grâce à une opération de disposition de tuyau lorsqu'un tuyau (31) est disposé à travers un plancher ou un mur (32), **caractérisé en ce que** ledit système comporte une enveloppe (30) qui de l'un ou des deux côtés du plancher / du mur scelle l'intervalle entre le tuyau (31) et la gaine de guidage (32a), où l'enveloppe est fabriquée en un matériau en forme de feuillet qui est découpé et cousu en une forme de cylindre ajusté à différentes dimensions de tuyau (31) et de gaine de guidage (32a) sans moulage.

16. Système selon la revendication 15, **caractérisé en ce que** ledit matériau en forme de feuillet peut résister à une explosion de 1 bar, puis peut résister à une température de 1100°C pendant deux heures.

17. Système selon la revendication 15, **caractérisé en ce que** ledit matériau en forme de feuillet dans une couche comporte un matériau isolant, et **en ce que** de manière externe par rapport à ce matériau isolant est disposée une toile de silicone qui assure que l'isolation ne soit pas mouillée.

18. Système selon la revendication 15, **caractérisé en ce que** l'enveloppe (30) est suffisamment flexible pour envelopper des dimensions de tuyau pouvant descendre jusqu'à 50 millimètres.

19. Système selon la revendication 15, dans lequel la maintenance est simple à effectuer, **caractérisé en ce que** l'enveloppe (30) peut être démontée pour l'inspection / la maintenance.
